# EUROPEAN PATENT SPECIFICATION

(11) **EP 3 159 390 B1**
(45) Date of publication and mention of the grant of the patent: **11.12.2019**
(21) Application number: 15306692.3
(22) Date of filing: 21.10.2015
(51) Int. Cl.: C09K 8/68, C09K 8/88, E21B 43/267

(54) **COMPOSITION IN PARTICULATE FORM COMPRISING A POLYMER AND A PROPPANT USEFUL FOR HYDRAULIC FRACTURING OPERATION**
ZUSAMMENSETZUNG IN PARTIKELFORM MIT EINEM POLYMER UND EINEM STÜTZMITTEL, VERWENDBAR FÜR HYDRAULISCHEN FRAKTURIERUNGSBETRIEB
COMPOSITION SOUS FORME PARTICULAIRE COMPRENANT UN POLYMÈRE ET UN AGENT DE SOUTÈNEMENT UTILE POUR UNE OPÉRATION DE FRACTURATION HYDRAULIQUE

(43) Date of publication of application: 26.04.2017
(73) Proprietor: S.P.C.M. SA, 42160 Andrézieux Bouthéon (FR)
(72) Inventor: FAVERO, Cédrick, 42610 SAINT ROMAIN LE PUY (FR)
(74) Representative: Cabinet Laurent & Charras

(56) References cited:
- EP-A1- 2 703 598
- WO-A1-2010/021563
- US-A1- 2012 157 356

## Description

Hydraulic fracturing operations have increased, first in the United States of America and then in Canada, and will be expanded into countries such as China, Poland, Argentina, Germany and England.

These operations, over the years, have become increasingly complex, being applied to increasingly lengthy horizontal drillings, so as to increase the production per well.

In principle, it consists in fracturing the in-place rock by injections of water at very high pressure (200 to 600 bar), in blocking the fractures by the injection of a propping agent, such as, for example, sand or ceramic, and in extracting the gas or oil therefrom.

Compositions for hydraulic composition contain water, chemicals and proppant, water being the most important part of the composition.

Chemicals have been developed in order to make possible these fracturing operations in a safe and efficient manner. Mention may be made, among these chemicals to biocides, corrosion inhibitor, lubricant, iron chelating agent and polymers.

Polymer type chemicals are for example friction reducers, anti-dust, viscosifying agents, crosslinking agents, scale inhibitors, clay inhibitors.

These chemicals are either in liquid form such as in solution form, in emulsion form, in dispersion form or in powder form. But when they are added in the hydraulic composition, they are added in fully solubilized and diluted liquid form, obtained by dissolving the commercial polymer as such in water or in brine.

The dissolution of the polymer is difficult but can be made with the use of a dissolution unit such as "PSU" (Polymer Slicing Unit) described in the document US 8 168 871. Subsequently, the Applicant described a mobile system for dissolving polyacrylamides in a large amount in the document WO 2010/010698, taking into account sizes and weights allowed between two fracturing operations. The applicant also described an improved mobile system in the document US 2014/054042.

Although the installations mentioned above are effective to dissolve polymers, there is a need for simple hydraulic fracturing process and a reduction of footprint. There is a need for using less equipment to prepare the hydraulic fracturing composition.

There is also a need to limit the tendency towards caking of polymer in powder form for example during storage stage, and its consequence on the free-flowing during handling. The small particle size of the powder tends to limit its ability to flow in silos and when large volume of powder is handled, dust is formed creating health and security issues.

The use of polymer in liquid form suffers from the use of an inert diluent. This diluent adds cost and increases storage and footprint. The solution form may also be sensitive to freezing and to bacterial contamination. In case of spill, liquids cannot be contained easily and can contaminate the environment. In addition, when recycled produced water is used, it's often difficult to get the polymer fully solubilized.

US 2012/157356 describes a dry blend of polymer and chemicals for hydraulic fracturing operations, said blend being dissolved in water to form a liquid mixture. A proppant may be then added to the liquid mixture and mixed in a blender.

The Applicant has developed a novel composition for hydraulic fracturing operation which makes it possible to solve the issues described above.

The present invention provides a composition for fracturing operation comprising at least one water-soluble or water-swellable polymer and at least one proppant wherein the composition is in particulate form and the polymer is in particulate form and has an average particle size comprised between 10 and 1000 microns. The polymer in particle form is premixed with a proppant and the resulting mixture is directly used as a blend in the preparation of an injection fluid in a hydraulic fracturing operation.

The invention also provides a process of hydraulic fracturing using the composition of the invention.

The composition of the invention comprises at least one water-soluble or water-swellable polymer and at least one proppant, wherein the composition is in particulate form and the polymer is in particulate form and has an average particle size comprised between 10 and 1000 microns.

In a preferred embodiment, the water-soluble or water-swellable polymer has an average particle size comprised between 100 and 850 microns, even more preferably comprised between 150 and 600 microns.

The average particle size means the average diameter measured with a laser particle sizer using conventional techniques that are part of the general knowledge of the skilled person.

The composition may contain moisture but should remain handled and should keep its flowing behavior such as sugar. The composition contains preferably less than 30% by weight of moisture, more preferably less than 20% by weight, even more preferably less than 12% by weight.

The polymer is a synthetic polymer or a natural polymer or a semi-synthetic polymers or mixtures thereof.

Natural and semi-synthetic polymer may be selected from the group consisting of xanthan gum, guar gum, modified guar gum such as cationic guar gum or hydroxypropyl guar gum, scleroglucan, schizophillan, cellulosic derivatives such as carboxymethyl cellulose, or mixtures thereof.

In a preferred embodiment, the polymer is a synthetic anionic or cationic or non-ionic or amphoteric polymer and based on non-ionic monomers and/or cationic monomers and/or anionic monomers.

Non-ionic monomer may be selected from the group consisting of acrylamide, methacrylamide, N-mono derivatives of acrylamide, N-mono derivatives of methacrylamide, N,N derivatives of acrylamide, N,N derivatives of methacrylamide, acrylic esters, methacrylic esters, N-vinylpyrrolidone, and mixtures thereof. Preferably, the non-ionic monomer is acrylamide.

Cationic monomers may be selected from the group consisting of dimethylaminoethyl acrylate (DMAEA) quaternized or salified, dimethylaminoethyl methacrylate (DMAEMA) quaternized or salified, diallyldimethyl ammonium chloride (DADMAC), acrylamidopropyl trimethylammonium chloride (APTAC), methacrylamidopropyl trimethylammonium chloride (MAPTAC), and mixtures thereof.

Anionic monomers may be selected from the group consisting of monomers having a carboxylic function, monomers having a sulfonic acid function, monomers having a phosphonic acid function, their salts thereof, and their mixtures thereof; alternatively from the group consisting of acrylic acid, acrylamide tertio butyl sulfonic acid (ATBS), their salts thereof, and mixtures thereof.

The synthetic polymer may also contain hydrophobic monomers.

The synthetic polymer may be linear or structured. By "structured", it is meant a polymer not only consisting of one linear chain of moieties (i.e. polymerized monomers), but instead a polymer having the form of a star, a comb, or a polymer having pending groups of pending chains on the side of the main chain.

The structuration of the polymer is preferably carried out during the polymerization of the monomers, in the presence of a branching/crosslinking agent and possibly a transfer agent. A non-exhaustive list of branching agents includes: methylenebisacrylamide (MBA), ethylene glycol diacrylate, polyethylene glycol dimethacrylate, vinyloxyethyl acrylate, vinyloxyethyl methacrylate, triallylamine, glyoxal, compounds of the glycidyl ether type such as ethylene glycol diglycidyl ether, or epoxies or any other method known to the person skilled in the art, producing branching.

The polymerization of the synthetic polymer may be carried out using any suitable polymerization technique well known in the art. Suitable techniques include techniques comprising a polymerization step selected from the group consisting of solution polymerization, suspension polymerization, gel polymerization, precipitation polymerization, emulsion polymerization (aqueous or inverse) or micellar polymerization. A final step of polymerization is the transformation of the resulting polymer in particle form thanks to conventional means such as drum drying, spray-drying, fluid bed drying, adsorption on mineral particles.

The polymer may be co-hydrolyzed or post-hydrolyzed.

The polymer may include a chemical tag, covalently bonded to its chain ends, main carbon chain, or side groups, so as the polymer can be detected at trace level using analytical tools such as ICP (Inductively Coupled Plasma), fluorescence, UV, immunoassay test kits.

The synthetic polymer may have a weight-average molecular weight in the range of about 500 g/mol to about 30 millions g/mol.

The polymer may have different role in the composition of the invention. It may be a dispersant, a scale inhibitor, a friction reducer, an anti-dust, a viscosifying agent, a clay inhibitor.

The composition of the invention may comprise more than one water-soluble or water-swellable polymer. They are all in particulate form. The composition may for example comprise an anti-dust, a friction reducer and a proppant. The composition may comprise a friction reducer, a viscosifying agent and a proppant. Any combination is possible depending of the needs of the fracturation operation.

Proppants are largely used in fracturing operations to create and maintain channels to extract oil or gas. Any suitable proppant particulates may be used in the composition of the invention. Proppant may be for example graded natural sand or nut shells, or bauxite, ceramic materials, glass materials, polymer beads, composite particles, and the like.

Generally, the proppant particulates have an average particle size comprised between 10 microns and 5000 microns. In a preferred embodiment, the proppant particulates have an average particle size comprised between 50 and 2000 microns, preferably between 80 and 800 microns.

The average particle size means the average diameter measured with a laser particle sizer using conventional techniques that are part of the general knowledge of the skilled person.

In a preferred embodiment, the proppant is a graded sand.

The composition of the invention may also comprise other types of chemicals (additional additives) such as biocides, corrosion inhibitor, lubricant, iron chelating agent. Additional additives potentially added in the composition of the invention represent less than 10 weight %. The composition may also contain mineral filler such as sodium sulfate, ammonium sulphate, silica, or salts such as sodium chloride, magnesium chloride, or urea, said compounds represent less than 5 weight % of the composition.

The composition is obtained by mixing at least one water-soluble or water-swellable polymer in particulate form and at least one proppant. Any suitable means may be used. The water-soluble or water-swellable polymer content in the composition is in the range of about 0.1 to about 50 weight % based on the total weight of the composition, preferably in the range of about 0.2 to about 30 weight %. The proppant content in the composition is in the range of about 30 to about 99.9 weight % based on the total weight of the composition, preferably in the range of about 50 to about 99.5 weight %.

In a preferred embodiment, the size of the polymer particle is lower than the size of the proppant. In a preferred embodiment, the ratio between the average particle size of the polymer and the average particle size of the proppant is comprised between 0.4 and 1, preferably between 0.5 and 0.9, more preferably between 0.5 and 0.8.

The invention also provides a process of hydraulic fracturing using the composition of the invention. According to the invention the process for hydraulic fracturation comprises the steps of:
- providing the composition in particulate form described above,
- adding said composition into a blender,
- mixing said composition with water or brine into the blender,
- injecting the resulting mixture into a subterranean formation.

In the fracturing domain, a blender is a tank with an agitation to mix the different ingredients of a fracturing fluid which then pumped and injected in the subterranean formation. In other words, the fracturing fluid is prepared into the blender by mixing water or brine, polymer(s), proppant(s) and potentially other additives.

Into the process according to the invention, the composition of the invention is added in particulate form directly into the blender. There is no dissolution or dilution step of the composition before its addition into the blender. It may be added with conventional means.

Additional polymer according to the invention may be added into the blender before or during the mixing step. This is particularly useful when it is necessary to adjust the dosage in polymer.

Polymer according to the invention is water-soluble or water-swellable polymer, preferably synthetic polymer which may has the role of dispersant, scale inhibitor, friction reducer, anti-dust, viscosifying agent, clay inhibitor.

Additives may be also added into the blender before or during the mixing step. Additives mean other types of chemicals (additional additives) such as biocides, corrosion inhibitor, lubricant, iron chelating agent.

When additional polymer or additives are added into the blender, they may be in liquid form or in particulate form.

The residence time of the water-soluble or water-swellable polymer in the blender is generally in the range of about 10 seconds to about 10 minutes, more generally about 1 minute.

The water or the brine, or recycled water or brine, in which the composition of the invention is added may have a temperature in the range of 5°C to about 60°C.

The amount of polymer coming from the composition is comprised between 50 ppm by weight of the resulting mixture, and 10000 ppm.

After the mixing step, the resulting mixture is pumped and injected into a subterranean formation in order to fracture the rocks and create channels which permit the recovery of oil or gas.

The invention also concerns the use of the composition described above in a hydraulic fracturing operation.

The invention has the following advantages. The composition and process of the invention offer a simple hydraulic fracturing process. One of the benefits is the reduction of equipment to prepare the hydraulic fracturing composition. Complex installation of dissolution and maturation tank for completely dissolve the polymer is avoided. The consequence is a reduction of foot-print which is one of the key factors in hydraulic fracturing operations. Another benefit is the mitigation of the problem of caking of polymer in powder form for example during storage stage, and its consequence on the free-flowing during handling.

The invention and its advantages will become more apparent from the examples that follow. Embodiments and examples are shown to illustrate the present invention, and not to limit it.

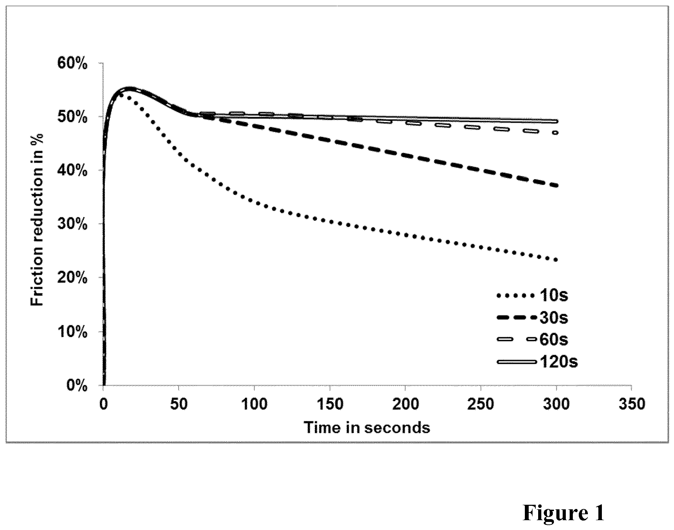

Figure 1 : friction reduction by time with different mixing time.

### EXAMPLE

A composition is made by mixing 1000 g of sand having an average particle size of 300 microns and 5 g of a post-hydrolyzed polyacrylamide polymer in powder form and having an average particle size of 200 microns The polymer has molecular weight of 27 millions Daltons and a anionicity of 30 mol%. The moisture content of the resulting mixture is 2.5w%. The composition is directly added into a blender comprising a brine (50 000 TDS NaCl) at 10% by weight and mixed during a period 10 seconds. A second mixture is made but the mixing time is 30 seconds. A third mixture is made with a mixing time of 60 seconds and a forth mixture is made with a mixing time of 120 seconds.

Each resulting mixture is injected at an initial pressure of 10.4 bar in a flow loop (length 25 m, internal diameter 6 mm) and the pressure is measured continuously during the test. The drag reducing effect of the polymer is measured in % which represents the reduction of the pressure (Delta P / P). The test is made at 20°C.

The results are compiled in figure 1.

It is surprising that an effective drag reduction effect of 50% is obtained with a mixing time of only 60 seconds.

The results show that a composition according to the invention is useable and perfectly adaptable in a fracturing process when said composition is directly added into the blender. It is possible to reach an effective drag reducing effect by adding a composition according to the invention directly into the blender, even if the mixing time with the brine is short. 60 seconds is typically the residence time of the polymer into a blender which is an inherent constraint of the hydraulic fracturing process.

This means that the sand will play its role of fracture permeability maintain, and that the polymer will play its role of friction reducer, even if the mixing time, or dissolution time for the polymer is only the residence time in the blender.

## Claims

1. Composition for fracturing operation comprising at least one water-soluble or water swellable polymer and at least one proppant wherein the composition is a free-flowable powder combining the proppant and the polymer in a particulate form, said particulates of water-soluble polymer before they are solubilized or particulates of water swellable polymer before they are swelled having an average particle size comprised between 10 and 1000 microns.

2. Composition according to claim 1, wherein the average particle size of the polymer is comprised between 100 and 850 microns, preferably comprised between 150 and 600 microns.

3. Composition according to any of claims 1 and 2, wherein the composition contains less than 30% by weight of moisture, preferably less than 20% by weight, more preferably less than 12% by weight.

4. Composition according to any of claims 1 to 3, wherein the polymer is a synthetic anionic or cationic or non-ionic or amphoteric polymer and based on non-ionic monomers and/or cationic monomers and/or anionic monomers.

5. Composition according to any of claims 1 to 4, wherein the polymer is a dispersant, a scale inhibitor, a friction reducer, an anti-dust, a viscosifying agent or a clay inhibitor.

6. Composition according to any of claims 1 to 5, wherein the proppant is a graded natural sand or nut shells, or bauxite, ceramic materials, glass materials, polymer beads, composite particles.

7. Composition according to any of claims 1 to 6, wherein the proppant has an average particle size comprised between 10 and 5000 microns, preferably comprised between 50 and 2000 microns, more preferably comprised between 80 and 800 microns.

8. Composition according to any of claims 1 to 7, wherein the water-soluble or water-swellable polymer content in the composition is in the range of about 0.1 to about 50 weight % based on the total weight of the composition, preferably in the range of about 0.2 to about 30 weight %.

9. Composition according to any of claims 1 to 8, wherein the proppant content in the composition is in the range of about 30 to about 99.9 weight % based on the total weight of the composition, preferably in the range of about 50 to about 99.5 weight %.

10. Composition according to any of claims 1 to 9, wherein the ratio between the average particle size of the polymer and the average particle size of the proppant is comprised between 0.4 and 1, preferably between 0.5 and 0.9, more preferably between 0.5 and 0.8.

11. Process for hydraulic fracturation comprising the steps of:
• providing the composition in particulate form according to any of claims 1 to 10,
• adding said composition into a blender,
• mixing said composition with water or brine into the blender,
• injecting the resulting mixture into a subterranean formation.

12. Process according to claim 11, wherein additional polymer or additives are added into the blender before or during the mixing step.

13. Process according to any of claims 11 and 12, wherein the amount of polymer coming from the composition is comprised between 50 ppm by weight of the resulting mixture, and 10000 ppm.

14. Use of the composition according to any of claims 1 to 10 in a hydraulic fracturing operation.

## Patentansprüche

1. Zusammensetzung für den Fracking-Betrieb, umfassend mindestens ein wasserlösliches oder wasserquellbares Polymer und mindestens ein Stützmittel, wobei die Zusammensetzung ein frei fließfähiges Pulver ist, das das Stützmittel und das Polymer in Teilchenform kombiniert, wobei die Teilchen von wasserlöslichem Polymer, bevor sie solubilisiert werden, oder Teilchen von wasserquellbarem Polymer, bevor sie gequellt werden, eine durchschnittliche Teilchengröße zwischen 10 und 1000 Mikrometern aufweisen.

2. Zusammensetzung nach Anspruch 1, wobei die durchschnittliche Teilchengröße des Polymers zwischen 100 und 850 Mikrometern, vorzugsweise zwischen 150 und 600 Mikrometern, liegt.

3. Zusammensetzung nach einem der Ansprüche 1 und 2, wobei die Zusammensetzung weniger als 30 Gew.-% Feuchtigkeit, vorzugsweise weniger als 20 Gew.-%, mehr bevorzugt weniger als 12 Gew.-%, enthält.

4. Zusammensetzung nach einem der Ansprüche 1 bis 3, wobei das Polymer ein synthetisches anionisches oder kationisches oder nichtionisches oder amphoteres Polymer ist und auf nichtionischen Monomeren und/oder kationischen Monomeren und/oder anionischen Monomeren basiert.

5. Zusammensetzung nach einem der Ansprüche 1 bis 4, wobei das Polymer ein Dispergiermittel, ein Ablagerungsinhibitor, ein Reibungsverminderer, ein Antistaubmittel, ein Viskosifizierungsmittel oder ein Toninhibitor ist.

6. Zusammensetzung nach einem der Ansprüche 1 bis 5, wobei das Stützmittel ein sortierter natürlicher Sand oder Nussschalen oder Bauxit, Keramikmaterialien, Glasmaterialien, Polymerperlen, Verbundteilchen ist.

7. Zusammensetzung nach einem der Ansprüche 1 bis 6, wobei das Stützmittel eine durchschnittliche Teilchengröße zwischen 10 und 5000 Mikrometern, vorzugsweise zwischen 50 und 2000 Mikrometern, mehr bevorzugt zwischen 80 und 800 Mikrometern, aufweist.

8. Zusammensetzung nach einem der Ansprüche 1 bis 7, wobei der Gehalt an wasserlöslichem oder wasserquellbarem Polymer in der Zusammensetzung im Bereich von etwa 0,1 bis etwa 50 Gew.-%, bezogen auf das Gesamtgewicht der Zusammensetzung, vorzugsweise in Bereich von etwa 0,2 bis etwa 30 Gew.-%, liegt.

9. Zusammensetzung nach einem der Ansprüche 1 bis 8, wobei der Stützmittelgehalt in der Zusammensetzung im Bereich von etwa 30 bis etwa 99,9 Gew.-% bezogen auf das Gesamtgewicht der Zusammensetzung, vorzugsweise im Bereich von etwa 50 bis etwa 99,5 Gew.-%, liegt.

10. Zusammensetzung nach einem der Ansprüche 1 bis 9, wobei das Verhältnis zwischen der durchschnittlichen Teilchengröße des Polymers und der durchschnittlichen Teilchengröße des Stützmittels zwischen 0,4 und 1, vorzugsweise zwischen 0,5 und 0,9, mehr bevorzugt zwischen 0,5 und 0,8, liegt.

11. Verfahren zum Hydrofracking ("Hydraulic Fracturing"), umfassend die Schritte:
• Bereitstellen der Zusammensetzung in Teilchenform nach einem der Ansprüche 1 bis 10,
• Zugeben der Zusammensetzung in einen Mischer,
• Mischen der Zusammensetzung mit Wasser oder Salzlösung in den Mischer,
• Einspritzen der resultierenden Mischung in eine unterirdische Formation.

12. Verfahren nach Anspruch 11, wobei zusätzliches Polymer oder Additive vor oder während des Mischschritts in den Mischer gegeben werden.

13. Verfahren nach einem der Ansprüche 11 und 12, wobei die Menge an Polymer, die aus der Zusammensetzung stammt, zwischen 50 Gew.-ppm der resultierenden Mischung und 10000 ppm liegt.

14. Verwendung der Zusammensetzung nach einem der Ansprüche 1 bis 10 in einem Hydrofracking-Betrieb ("Hydraulic Fracturing"-Betrieb).

## Revendications

1. Composition adaptée pour des opérations de fracturation comprenant au moins un polymère hydrosoluble ou gonflable dans l'eau et au moins un agent de soutènement dans laquelle la composition est sous forme d'une poudre fluide combinant l'agent de soutènement et le polymère sous la forme de particules, lesdites particules du polymère hydrosoluble, avant leur solubilisation ou lesdites particules du polymère gonflable dans l'eau, avant leur gonflement, ayant une taille moyenne de particules comprise entre 10 et 1000 µm.

2. Composition selon la revendication 1, selon laquelle la taille moyenne de particules du polymère est comprise entre 100 et 850 µm, préférentiellement comprise entre 150 et 600 µm.

3. Composition selon l'une des revendications 1 et 2, selon laquelle la composition contient moins de 30 % en poids d'humidité, préférentiellement moins de 20 % en poids, plus préférentiellement moins de 12 % en poids.

4. Composition selon l'une des revendications 1 à 3, selon laquelle le polymère est un polymère synthétique anionique ou cationique ou non-ionique ou amphotère et est à base de monomères non-ioniques et/ou de monomères cationiques et/ou de monomères anioniques.

5. Composition selon l'une des revendications 1 à 4, selon laquelle le polymère est un agent dispersant, un anti-tartre, un réducteur de frictions, un anti-poussière, un agent viscosifiant ou un inhibiteur d'argile.

6. Composition selon l'une des revendications 1 à 5, selon laquelle l'agent de soutènement est un sable naturel calibré ou des coquilles de noix, ou de la bauxite, des céramiques, du verre, des billes de polymère, des particules de matériau composite.

7. Composition selon l'une des revendications 1 à 6, selon laquelle l'agent de soutènement a une taille moyenne de particules comprise entre 10 et 5000 µm, préférentiellement comprise entre 50 et 2000 µm, plus préférentiellement comprise entre 80 et 800 µm.

8. Composition selon l'une des revendications 1 à 7, selon laquelle la teneur en polymère hydrosoluble ou gonflable dans l'eau dans la composition est comprise entre environ 0.1 et 50 % en poids par rapport au poids total de la composition, de préférence entre environ 0.2 et 30 % en poids.

9. Composition selon l'une des revendications 1 à 8, selon laquelle la teneur en agent de soutènement dans la composition est comprise entre environ 30 et 99.9 % en poids par rapport au poids total de la composition, de préférence entre environ 50 et 99.5 % en poids.

10. Composition selon l'une des revendications 1 à 9, selon laquelle le ratio entre la taille moyenne de particules du polymère et la taille moyenne de particules de l'agent de soutènement est comprise entre 0.4 et 1, de préférence entre 0.5 et 0.9, plus préférentiellement entre 0.5 et 0.8.

11. Procédé de fracturation hydraulique comprenant les étapes suivantes :
• Fournir une composition sous forme particulaire selon l'une des revendications 1 à 10,
• Ajouter ladite composition dans un mélangeur,
• Mélanger ladite composition avec l'eau ou de la saumure dans le mélangeur,
• Injecter le mélange résultant dans la formation souterraine.

12. Procédé selon la revendication 11, selon lequel le polymère additionnel ou les additifs sont ajoutés dans le mélangeur avant ou pendant l'étape de mélange.

13. Procédé selon l'une des revendications 11 et 12, selon lequel la quantité de polymère émanant de la composition est comprise entre 50 ppm en poids du mélange résultant, et 10 000 ppm.

14. Utilisation de la composition selon l'une des revendications 1 à 10 dans une opération de fracturation hydraulique.
